# EUROPEAN PATENT SPECIFICATION

(11) **EP 3 220 348 B1**
(45) Date of publication and mention of the grant of the patent: **27.11.2024**
(21) Application number: 16160294.1
(22) Date of filing: 15.03.2016
(51) Int. Cl.: G06T 3/04

(54) **IMAGE ZOOMING METHOD AND IMAGE ZOOMING APPARATUS**
BILDZOOMVERFAHREN UND BILDZOOMVORRICHTUNG
PROCÉDÉ ET APPAREIL DE ZOOM D'IMAGE

(43) Date of publication of application: 20.09.2017
(73) Proprietor: Continental Autonomous Mobility Germany GmbH, 85057 Ingolstadt (DE)
(72) Inventor: Arbeiter, Georg, 96317 Kronach (DE); Garcia Marques, Rodrigo, 96050 Bamberg (DE)
(74) Representative: Continental Corporation

(56) References cited:
- US-A1- 2012 242 782
- US-A1- 2015 109 444
- US-A1- 2015 110 420
- US-B1- 6 717 610

## Description

The present invention relates to an image zooming method and an image zooming apparatus. In particular, the present invention relates to an enhanced zooming of image data captured by a camera.

US 2012/242782 A1 relates to a method for processing image data captured by a fisheye lens. Image data of a camera are transformed to a three-dimensional plane of a "virtual lens. Subsequently, the transformed image data of the virtual lens 31 are projected on a "second image plane" . Finally, a bilinear zooming algorithm may be applied to the image data.

Modern vehicles comprise a plurality of systems for assisting a driver when driving the vehicle. For instance, modern vehicles may comprise a surround view system. Such a surround view system may utilize a plurality of cameras for capturing image data of the environment of a vehicle, and a display for providing the captured image data to the driver. An important function of a surround view system is a 180 degree view, created from the image data of a camera of the surround view system. For instance, the 180 degree view may be used to detect or to show crossing traffic.

For an early detection of crossing the traffic by the driver, the horizontal outer regions of a view may be zoomed in. However, conventional approaches for zooming particular regions of an image data may distort the two-dimensional camera image. This gives poor control of the actual zooming. Further, conventional zooming of particular regions in image data usually require a huge computational effort.

Hence, there is a need for an enhanced zooming of image data. In particular, there is a need for an enhanced zooming of image data which can be realized by small computational resources.

For this purpose, the present invention provides an image zooming method according to claim 1. Further, the present invention provides an image zooming apparatus according to claim 7. Further, a surround view system of a vehicle is provided, comprising an image zooming apparatus according to the present invention and a display. The display is adapted to display the image data rendered by the rendering unit.

An idea underlying the present invention is to transform image data captured by a camera to a three-dimensional surface and assign a 3d-coordinates to the positions on the surface that correspond to the pixels. Accordingly a further processing of the pixels having 3d-coordiantes, e.g. a zooming, can be performed in a simple and easy manner. In particular, precomputed functions can be applied to the pixels for zooming the image data.

Since the zooming can be realized by applying precomputed functions on the 3D-coordinates that correspond to the individual pixels, the zooming can be realized by very simple and cheap computational resources.

According to a further embodiment, the step for projecting the provided image data comprises applying a lens undistortion to the provided image data. In this way, distortions of the lens of camera can be compensated when projecting the image data on the three-dimensional surface.

According to a further aspect, the step of applying a predefined zoom function comprises shifting x-coordinates and/or y-coordinates of the transformed image data. By shifting x-coordinates and/or y-coordinates of the transformed image data, a very fast and efficient zooming can be achieved.

According to a particular embodiment, the x-coordinates and/or the y-coordinates of the transformed image data are shifted based on a continuous function.

According to a further aspect, the coordinates of the transformed image are shifted based on a sigmoidal function. In this way, a smooth transition between regions of different zoom factors in the image data can be achieved.

According to a further embodiment, the predefined zoom function comprises a prestored assignment of pixels of the transformed image data to coordinates in a grid of the zoomed image data. In this way, the zooming can be achieved by referring to precomputed data. Hence, it is not necessary to compute the zoom function for each zooming separately. Accordingly, a very efficient zooming can be achieved by small computational resources.

According to a further embodiment of the zooming apparatus, the zooming unit comprises a memory. The memory is adapted to store a predetermined assignment of transformed image data in the planar grid to coordinates of a grid relating to the zoomed image data.

According to a further embodiment, the camera comprises a wide-angle lens camera. In particular, the camera may comprise a lens for a view angle of approximately 180 degrees.

According to a further aspect, the image zooming apparatus comprises a graphic processing unit (GPU). By applying graphic processing unit, a very efficient and fast rendering of the image data can be achieved.

The above identified aspects and embodiments may be combined with each other where possible. Further embodiments and implementations of the present invention may also comprise combinations of embodiments and features of the present invention.

The present invention will be described in the following by embodiments based on the accompanying drawings, wherein:
- Figure 1:: a schematic illustration of an image zooming apparatus according to an embodiment;
- Figure 2:: a schematic illustration for applying an image zooming according to an embodiment; and
- Figure 3:: a flowchart for applying an image zooming method underlying an embodiment.

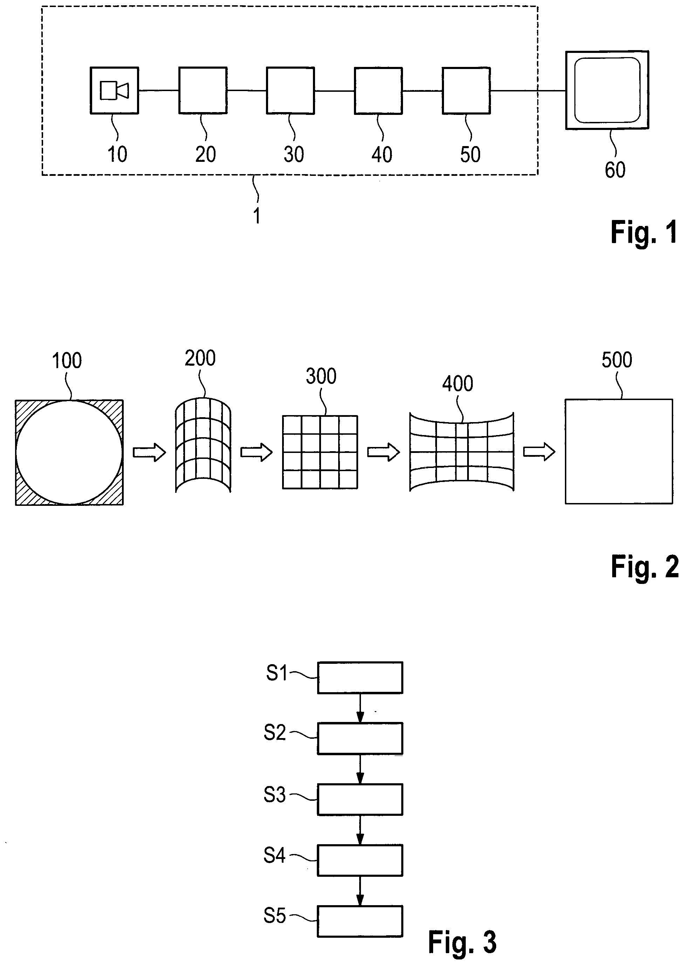

Figure 1 shows a schematic illustration of an image zooming apparatus 1 according to an embodiment. The image zooming apparatus 1 comprises a camera 10, a projecting unit 20, a transforming unit 30, a zooming unit 40 and a rendering unit 50. Camera 10 may be any kind of camera for providing image data. For instance, camera 10 may be a camera of a surround view system, in particular of a surround view system of a vehicle. Camera 10 may also be a camera system comprising a plurality of imaging units. In particular, camera 10 may be a camera capturing image data in a field of view having a wide opening angle. For example, camera 10 may capture image data in a segment of an opening angle of approximately 180 degrees. However, camera 10 is not limited to cameras having an opening angle of approximately 180 degrees. Camera 10 may also have an opening angle of approximately 160 degrees, 140 degrees, or any other opening angle. The image data captured by camera 10 are provided to projecting unit 20.

Projecting unit 20 receives the image data provided by camera 10 and processes the received image data to apply a projection of the received image data on a predetermined three-dimensional surface. The geometry of the predetermined three-dimensional surface may relate to the projecting properties of camera 10, in particular to the projecting properties of the lens used in camera 10. For example, the predetermined three-dimensional surface may be a curved surface corresponding to the projecting properties of camera 10. The three-dimensional surface used by projecting unit 20 may be, for example, a semi-cylindrical surface or surface of a polygon. Usually, the shape of the three-dimensional surface is pre-stored in projecting unit 20.

Projecting unit 20 may also compensate disturbances in the image data provided by camera 10. For example, projecting unit 20 may compensate lens distortions of camera 10. Any other distortions may be also compensated during the projecting of the image data on the three-dimensional surface. Alternatively, distortions, such as lens distortions, may be already compensated in camera 10 before providing the camera images to projecting unit 20.

After the image data provided by camera 10 are projected on the predetermined three-dimensional surface, the projected image data are provided to transform a unit 30. Transforming unit 30 receives the projected image data and transforms the image data relating to the three-dimensional surface to a planar grid. In particular, the image data are transformed to a regular, planar grid. In this way, the transformed image data may be provided as two-dimensional image data having a well-known, standardized grid. Such image data provide a very good basis for a further processing.

Next, the image data transformed to the planar grid are provided to zooming unit 40. Zooming unit 40 receives the transformed image data and applies a predefined zoom function to the transformed image data. In particular, an arbitrary zoom function can be applied to the transformed image data. Since the transformed image data are provided in a well-known, fixed grid, the zoom function which is applied to the transformed image data can be precomputed in advance. For example, for each pixel position of the transformed image data a shift of the x-coordinate and/or the y-coordinate can be determined in advance. This precomputed shift of the coordinates can be stored in a memory of zoom unit 40. In this way, the shift of the x-coordinate and/or the y-coordinate for each pixel of the transformed image data can be read out from the memory and applied to the transformed image data.

In this, way, an arbitrary zooming of the transformed image data can be realized. In particular, it is possible to precompute zooming functions, which zoom particular areas in the transformed image data, while other image areas are reduced. For example, image areas on the left and the right border may be zoomed. However, any other scheme for zooming particular areas of the image may be possible, too. Further, it may be also possible to reduce (de-zoom) an image area.

The zooming function which is applied in the zooming unit 40 may be, for example, a continuous function. In this way, a very smooth zooming of the desired areas in the transformed image data can be achieved. For instance, the zooming function which is applied to the transformed image data may be a sigmoidal function. Such a sigmoidal function provides a "S" shape. The sigmoidal function may be defined, for example by s (x) = 1/(1+e^{-x}) . However, any other function, in particular any other continuous function may be used for zooming particular areas in the transformed image data.

In order to provide a flexible zooming of the image data, it may be also possible to precompute and store a plurality of different zooming functions. The plurality of different zooming functions may be stored in a memory of zooming unit 40. Accordingly, one of the zooming functions may be selected and applied to the transformed image data. The selection of the appropriate zooming function may be performed, for instance, automatically. For example, if the zooming apparatus is applied to a surround view system of a vehicle, a different zooming function may be selected depending on a speed of the vehicle. Alternatively, object detection may be applied to the image data. Accordingly, an area may be zoomed, in which a particular object is detected. For example, one or more predetermined objects may be selected. If at least one of the selected predetermined objects is detected in the image data, the corresponding image area is zoomed based on an appropriate pre-stored zooming function. Alternatively, it may be possible to compute the necessary zooming function before applying the zooming.

After the transformed image data are zoomed based on the predetermined zoom function, the zoomed image data are provided to rendering unit 50. Rendering unit 50 renders the zoomed image data and provides the rendered image data to a display 60. Finally, the rendered image data are provided to a user on a display 60. The rendering of the image data can be performed, for instance, by a graphic processing unit (GPU). Such a graphic processing unit is a specialized processing unit for performing a graphical processing.

Figure 2 shows a schematic illustration of an image zooming according to an embodiment.

As can be seen in this figure, image data 100 are provided by a camera 10. As already explained in connection with Figure 1, the image data provided by camera 10 are projected on a three-dimensional surface 200. Preferably, the shape of the three-dimensional surface 200 is based on the projecting properties of camera 10 capturing the image data 100. For example, the shape of the three-dimensional surface 200 may be adapted based on the properties of a lens of camera 10. After the image data are projected on the three-dimensional surface 200, the projected image data are transformed to a planar grid 300. In particular, planar grid 300 may be a regular planar grid 300. Accordingly, the image data are provided in a format having a well-defined grid. In order to perform a zooming of particular areas/regions in the image data, a zooming function can be applied to the image data in the regular grid to obtain zoomed image data 400. In case of a horizontal or vertical zooming, it may be desired to keep the outer borders of the image at a constant coordinate, i.e. the zoomed image shall have a same width or a same height. Finally, the zoomed image data are rendered to obtain the texture of the zoomed image data which can be displayed on a screen 500.

Figure 3 shows a flowchart underlying a method for zooming image data according to an embodiment.

In step S1 image data which are captured by a camera 10 are provided. The captured image data are projected in step S2 on a predetermined three-dimensional surface.

In step S3, the projected image data are transformed to a planar grid to obtain transformed image data. Next, in step S4, a predefined zoom function is applied to the transformed image data to obtain zoomed image data. In particular, it may be possible to select a particular zoom function out of a plurality of precomputed zoom functions which is applied to the transformed image data. Finally, in step S5, the zoomed image data are rendered to a predetermined screen area.

Summarizing, the present invention relates to an enhanced zooming of image data, in particular to a zooming of image data captured by a wide-angle camera. A regional zooming of particular areas in the image data can be achieved in a very efficient way. For this purpose, the image data are projected on a three-dimensional surface and transformed to a well-defined planar grid. Based on the image data of the planar grid, a precomputed zooming can be applied to the image data.

## Claims

1. An image zooming method, comprising the steps:
providing (S1) image data captured by a camera (10);
projecting (S2) the provided image data on a predetermined three-dimensional surface, wherein the predetermined three-dimensional surface comprises a semi-cylindrical surface or surface of a polygon;
transforming (S3) the projected image data to a regular and planar standardized grid to obtain transformed image data;
applying (S4) a predefined zoom function to the transformed image data to obtain zoomed image data, wherein the predefined zoom function is precomputed in advance and keeps the outer borders of the image at a constant coordinate, such that the zoomed image has a same width or a same height; and
rendering (S5) the zoomed image data to a predetermined screen area.

2. The image zooming method according to claim 1, wherein the step (S2) for projecting the provided image data comprises applying a lens undistortion to the provided image data.

3. The images zooming method according to claim 1 or 2, wherein the step (S4) of applying a predefined zoom function comprises shifting x-coordinates and/or y-coordinates of the transformed image data.

4. The images zooming method according to claim 3, wherein the x-coordinates and/or y-coordinates of the transformed image are shifted based on a continuous function.

5. The images zooming method according to claim 3 or 4, wherein the x-coordinates and/or y-coordinates of the transformed image are shifted based on a sigmoidal function.

6. The images zooming method according to any of claims 1 to 5, wherein the predefined zoom function comprises a predetermined stored assignment of pixels of the transformed image data into coordinates in a grid of the zoomed image data.

7. An image zooming apparatus (1), comprising:
a camera (10), adapted to provide image data;
a projecting unit (20), adapted to project the provided image data on a predetermined three-dimensional surface, wherein the predetermined three-dimensional surface comprises a semi-cylindrical surface or surface of a polygon;
a transforming unit (30), adapted to transform the projected image data to a regular and planar standardized grid to obtain transformed image data;
a zooming unit (40), adapted to apply a predefined zoom function to the transformed image data to obtain zoomed image data, wherein the predefined zoom function is precomputed in advance and keeps the outer borders of the image at a constant coordinate, such that the zoomed image has a same width or a same height; and
a rendering unit (50), adapted to render the zoomed image data to a predetermined screen area.

8. The images zooming apparatus (1) according to claim 7, wherein the zooming unit (40) comprises a memory for storing a predetermined assignment of the transformed imaging data image data on the planar grid to coordinates of a grid relating to the zoomed image data.

9. The image zooming apparatus (1) according to claim 7 or 8, wherein the camera (10) comprises a wide-angle lens camera.

10. The image zooming apparatus (1) according to claim 7 to 9, wherein the rendering unit (50) comprises graphic processing unit, GPU.

11. A surround view system of a vehicle, comprising:
the images zooming apparatus (1) according to any of claims 7 to 10; and
a display (60), adapted into display of the image data rendered by the rendering unit (50).

## Patentansprüche

1. Verfahren zum Zoomen von Bildern, das die folgenden Schritte aufweist:
Bereitstellen (S1) von Bilddaten, die durch eine Kamera (10) erfasst werden; Projizieren (S2) der bereitgestellten Bilddaten auf eine vorbestimmte dreidimensionale Oberfläche, wobei die vorbestimmte dreidimensionale Oberfläche eine halbzylindrische Oberfläche oder eine Oberfläche eines Polygons umfasst;
Transformieren (S3) der projizierten Bilddaten in ein regelmäßiges und planares standardisiertes Raster, um transformierte Bilddaten zu erhalten;
Anwenden (S4) einer vordefinierten Zoomfunktion an den transformierten Bilddaten, um gezoomte Bilddaten zu erhalten, wobei die vordefinierte Zoomfunktion zuvor im Voraus berechnet wird und die Außengrenzen des Bildes bei einer konstanten Koordinate hält, sodass das gezoomte Bild eine gleiche Breite oder eine gleiche Höhe aufweist; und
Rendern (S5) der gezoomten Bilddaten in einem vorbestimmten Bildschirmbereich.

2. Verfahren zum Zoomen von Bildern nach Anspruch 1, wobei der Schritt (S2) zum Projizieren der bereitgestellten Bilddaten das Anwenden einer Objektiventzerrung an den bereitgestellten Bilddaten aufweist.

3. Verfahren zum Zoomen von Bildern nach Anspruch 1 oder 2, wobei der Schritt (S4) zum Anwenden einer vordefinierten Zoomfunktion das Verschieben von x-Koordinaten und/oder y-Koordinaten der transformierten Bilddaten aufweist.

4. Verfahren zum Zoomen von Bildern nach Anspruch 3, wobei die x-Koordinaten und/oder y-Koordinaten des transformierten Bildes basierend auf einer kontinuierlichen Funktion verschoben werden.

5. Verfahren zum Zoomen von Bildern nach Anspruch 3 oder 4, wobei die x-Koordinaten und/oder y-Koordinaten des transformierten Bildes basierend auf einer sigmoidalen Funktion verschoben werden.

6. Verfahren zum Zoomen von Bildern nach einem der Ansprüche 1 bis 5, wobei die vordefinierte Zoomfunktion eine vorbestimmte gespeicherte Zuweisung von Pixeln der transformierten Bilddaten in Koordinaten in einem Raster der gezoomten Bilddaten aufweist.

7. Einrichtung (1) zum Zoomen von Bildern, die Folgendes aufweist:
eine Kamera (10), die ausgebildet ist zum Bereitstellen von Bilddaten;
eine Projektionseinheit (20), die ausgebildet ist zum Projizieren der bereitgestellten Bilddaten auf eine vorbestimmte dreidimensionale Oberfläche, wobei die vorbestimmte dreidimensionale Oberfläche eine halbzylindrische Oberfläche oder eine Oberfläche eines Polygons umfasst;
eine Transformationseinheit (30), die ausgebildet ist zum Transformieren der projizierten Bilddaten in ein regelmäßiges und planares standardisiertes Raster, um transformierte Bilddaten zu erhalten;
eine Zoomeinheit (40), die ausgebildet ist zum Anwenden einer vordefinierten Zoomfunktion an den transformierten Bilddaten, um gezoomte Bilddaten zu erhalten, wobei die vordefinierte Zoomfunktion zuvor im Voraus berechnet wird und die Außengrenzen des Bildes bei einer konstanten Koordinate hält, sodass das gezoomte Bild eine gleiche Breite oder eine gleiche Höhe aufweist; und
eine Rendering-Einheit (50), die ausgebildet ist zum Rendern der gezoomten Bilddaten in einem vorbestimmten Bildschirmbereich.

8. Einrichtung (1) zum Zoomen von Bildern nach Anspruch 7, wobei die Zoomeinheit (40) einen Speicher zum Speichern einer vorbestimmten Zuweisung der transformierten Bilddaten in dem planaren Raster zu Koordinaten eines Rasters bezüglich der gezoomten Bilddaten aufweist.

9. Einrichtung (1) zum Zoomen von Bildern nach Anspruch 7 oder 8, wobei die Kamera (10) eine Weitwinkelobjektkamera umfasst.

10. Einrichtung (1) zum Zoomen von Bildern nach Anspruch 7 bis 9, wobei die Rendering-Einheit (50) eine grafische Verarbeitungseinheit, GPU, umfasst.

11. Rundumsichtsystem eines Fahrzeugs, das Folgendes umfasst:
die Einrichtung (1) zum Zoomen von Bildern nach einem der Ansprüche 7 bis 10; und
eine Anzeigevorrichtung (60), die ausgebildet ist zum Anzeigen der durch die Rendering-Einheit (50) gerenderten Bilddaten.

## Revendications

1. Procédé de zoom dans une image, comprenant les étapes suivantes :
fourniture (S1) de données d'image capturées par une caméra (10) ;
projection (S2) des données d'image fournies sur une surface tridimensionnelle prédéterminée, la surface tridimensionnelle prédéterminée comprenant une surface semi-cylindrique ou la surface d'un polygone ;
transformation (S3) des données d'image projetées en une grille normalisée régulière et plane pour obtenir des données d'image transformées ;
application (S4) d'une fonction de zoom prédéfinie aux données d'image transformées pour obtenir des données d'image zoomées, la fonction de zoom prédéfinie étant précalculée à l'avance et maintenant les bords extérieurs de l'image à une coordonnée constante, de telle sorte que l'image zoomée a une même largeur ou une même hauteur ; et
rendu (S5) des données d'image zoomées sur une zone d'écran prédéterminée.

2. Procédé de zoom dans une image selon la revendication 1, dans lequel l'étape (S2) de projection des données d'image fournies comprend l'application d'une non-distorsion de lentille aux données d'image fournies.

3. Procédé de zoom dans une image selon la revendication 1 ou 2, dans lequel l'étape (S4) d'application d'une fonction de zoom prédéfinie comprend le décalage de coordonnées x et/ou de coordonnées y des données d'image transformées.

4. Procédé de zoom dans une image selon la revendication 3, dans lequel les coordonnées x et/ou les coordonnées y de l'image transformée sont décalées sur la base d'une fonction continue.

5. Procédé de zoom dans une image selon la revendication 3 ou 4, dans lequel les coordonnées x et/ou les coordonnées y de l'image transformée sont décalées sur la base d'une fonction sigmoïde.

6. Procédé de zoom dans une image selon l'une quelconque des revendications 1 à 5, dans lequel la fonction de zoom prédéfinie comprend une assignation prédéterminée stockée de pixels des données d'image transformées à des coordonnées dans une grille des données d'image zoomées.

7. Appareil (1) de zoom dans une image, comprenant :
une caméra (10), adaptée pour fournir des données d'image ;
une unité de projection (20), adaptée pour projeter les données d'image fournies sur une surface tridimensionnelle prédéterminée, la surface tridimensionnelle prédéterminée comprenant une surface semi-cylindrique ou la surface d'un polygone ;
une unité de transformation (30), adaptée pour transformer les données d'image projetées en une grille normalisée régulière et plane pour obtenir des données d'image transformées ;
une unité de zoom (40), adaptée pour appliquer une fonction de zoom prédéfinie aux données d'image transformées pour obtenir des données d'image zoomées, la fonction de zoom prédéfinie étant précalculée à l'avance et maintenant les bords extérieurs de l'image à une coordonnée constante, de telle sorte que l'image zoomée a une même largeur ou une même hauteur ; et
une unité de rendu (50), adaptée pour effectuer le rendu des données d'image zoomées sur une zone d'écran prédéterminée.

8. Appareil (1) de zoom dans une image selon la revendication 7, dans lequel l'unité de zoom (40) comprend une mémoire destinée à stocker une assignation prédéterminée des données d'image transformées sur la grille plane à des coordonnées d'une grille associée aux données d'image zoomées.

9. Appareil (1) de zoom dans une image selon la revendication 7 ou 8, dans lequel la caméra (10) comprend une caméra à objectif grand-angle.

10. Appareil (1) de zoom dans une image selon la revendication 7 à 9, dans lequel l'unité de rendu (50) comprend une unité de traitement graphique, GPU.

11. Système de vision panoramique d'un véhicule, comprenant :
l'appareil (1) de zoom dans une image selon l'une quelconque des revendications 7 à 10 ; et
un écran (60), adapté pour afficher les données d'image rendues par l'unité de rendu (50).
